(19) **Europäisches Patentamt European Patent Office Office européen des brevets**

(11) **EP 1 186 156 B1**

(12) **EUROPEAN PATENT SPECIFICATION**

(45) Date of publication and mention
of the grant of the patent:
**22.10.2008 Bulletin 2008/43**

(51) Int Cl.:
**H04M 9/08** (2006.01)  **H04M 1/725** (2006.01)

(21) Application number: **00931266.1**

(86) International application number:
**PCT/EP2000/004858**

(22) Date of filing: **29.05.2000**

(87) International publication number:
**WO 2000/074350 (07.12.2000 Gazette 2000/49)**

(54) **ADAPTABILITY TO MULTIPLE HANDS-FREE COMMUNICATION ACCESSORIES**

ANPASSUNGSFÄHIGKEIT EINER FREISPRECHANLAGE FÜR MEHRERE ZUSATZGERÄTE

ADAPTABILITE A UNE PLURALITE D'ACCESSOIRES DE COMMUNICATION MAINS LIBRES

(84) Designated Contracting States:
**AT BE CH CY DE DK ES FI FR GB GR IE IT LI LU MC NL PT SE**

(30) Priority: **01.06.1999 US 323274**

(43) Date of publication of application:
**13.03.2002 Bulletin 2002/11**

(73) Proprietor: **TELEFONAKTIEBOLAGET LM ERICSSON (publ)**
**164 83 Stockholm (SE)**

(72) Inventors:
• **RASMUSSON, Jim**
**S-235 41 Vellinge (SE)**

• **CHRISTENSSON, Nils**
**S-211 45 Malmö (SE)**
• **PHILIPSSON, John**
**S-211 45 Malmö (SE)**

(74) Representative: **O'Connell, David Christopher**
**HASELTINE LAKE,**
**Redcliff Quay**
**120 Redcliff Street**
**Bristol BS1 6HU (GB)**

(56) References cited:
**EP-A- 0 723 378      WO-A-97/33384**
**US-A- 5 036 532      US-A- 5 349 698**
**US-A- 5 479 479      US-A- 5 841 856**

**Description**

**BACKGROUND**

The present invention relates telecommunications and other audio devices, and more particularly to the use of hands-free accessories in conjunction with telecommunications and other audio devices.

In the field of telecommunications, such as with speaker phones and in cellular telephony, it is often desirable to allow a user to operate communication equipment without requiring the continued occupation of one or more of the user's hands. This can be an important factor in environments, such as automobiles, where a driver's preoccupation with holding telephone equipment may jeopardize not only his or her safety, but also the safety of others who share the road. Freedom to use one's hands for something other than holding a microphone is useful in other applications as well, such as with internet communication by means of a personal computer, speech recognition by a computer, or with audio-visual presentation systems.

To accommodate these important needs, so-called "hands-free" equipment has been developed, in which microphones and loudspeakers are mounted or otherwise placed within the hands-free environment, thereby obviating the need to hold them. For example, in an automobile application, a cellular telephone's microphone might be mounted on the sun visor, while the loudspeaker may be a dash-mounted unit, or may be one that is associated with the car's stereo equipment. With components mounted in this fashion, a cellular telephone user may carry on a conversation without having to hold the cellular unit or its handset. Similarly, personal computers often have microphones and loudspeakers mounted, for example, in a monitor in relatively close proximity to each other.

One problem with a hands-free arrangement is that the microphone tends to pick up sound from the nearby loudspeaker, in addition to the voice of the user of the hands-free equipment (the so-called "near-end user"). This is also a problem in some non-hands-free devices, such as handheld mobile telephones, which are becoming

*CONFIRMATION COPY*

smaller and smaller. (Because of the small size, a mobile telephone's microphone cannot entirely be shielded from the sound emitted by its loudspeaker.) This sensing by the microphone of sound generated by the loudspeaker can cause problems in many types of applications. For example, in communications equipment, delays introduced by the communications system as a whole can cause the sound from the loudspeaker to be heard by the individual on the other end of the call (the so-called "far-end") as an echo of his or her own voice. Such an echo degrades audio quality and its mitigation is desirable if not an absolute necessity because the presence of a delayed echo seriously impedes the far-end user's ability to carry on a normal conversation. A similar problem can exist, for example, in automated systems that synthesize speech through a loudspeaker, and include voice recognition components for recognizing and responding to spoken commands or other words sensed by the microphone. In such applications, the presence of an echo of synthesized speech in the microphone signal can severely degrade the performance of the speech recognition components. Solutions for ameliorating such echoes include utilizing an adaptive echo cancellation filter, an echo attenuator or both in some kind of combined operation.

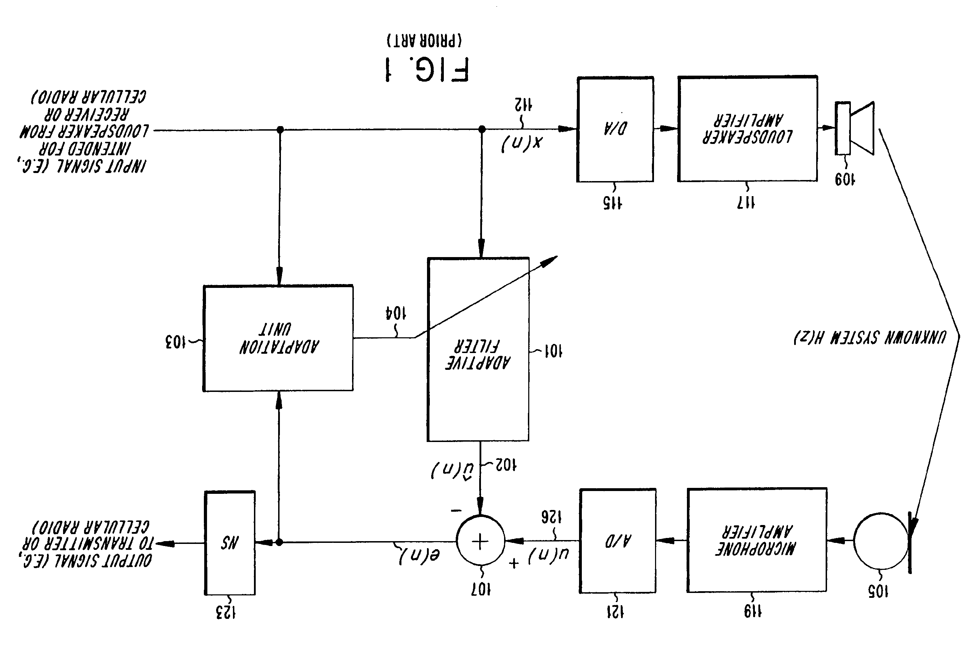

As a representative example of hands-free equipment in general, an exemplary "hands-free" mobile telephone, having a conventional echo canceler in the form of an adaptive filter arrangement, is depicted in FIG. 1. A hands-free communications environment may be, for example, an automotive interior in which the mobile telephone is installed. Such an environment can cause effects on an acoustic signal propagating therein, which effects are typically unknown. Henceforth, this type of environment will be referred to throughout this specification as an unknown system H(z). The hands-free mobile telephone includes a loudspeaker 109 for supplying far-end acoustic audio signals to the near-end user. The hands-free mobile telephone also includes a microphone 105 for converting near-end acoustic signals (usually generated by the near-end user) into an electrical or other signal for transmission to the far-end user.

In operation, a digital input audio signal 112 representing, say, a far-end user's voice is provided to a digital-to-analog (D/A) converter 115. The resultant analog signal is suitably amplified by a loudspeaker amplifier 117 before being supplied to the loudspeaker 109. In the reverse direction, the microphone 105 receives acoustic energy and converts this into an analog signal. This signal is suitably amplified by microphone amplifier 119, and then converted into a series of digital samples by analog-to-digital converter 121. (It is noted that in the exemplary embodiment, most of the processing is performed on digital signals, hence the need for the D/A and A/D converters 115, 121. In other embodiments and other applications, however, all of the processing depicted herein could be performed on analog signals. In such embodiments, the D/A and A/D converters 115, 121 could be dispensed with.) The resultant signal 126 is then further processed as necessary for eventual transmission to the far-end user.

In this arrangement, the microphone 105 is intended for detecting a user's voice, but may also have the undesired effect of detecting audio signals emanating from the loudspeaker 109. It is this undesired action that introduces the echo signal into the system.

Circuitry for reducing, if not eliminating, the echo includes an adaptive filter 101, such as an adaptive Finite Impulse Response (FIR) or Infinite Impulse Response (IIR) filter, an adaptation unit 103, such as a least mean square (LMS) cross correlator, and a subtractor 107. If one assumes that the only sound received by the microphone 105 is that originating from the loudspeaker 109 (of course, in practice the microphone will also receive sounds from the intended user as well as background noise), then a digitized echo signal 126 (also designated "u") is generated. In operation, the adaptive filter 101 generates an echo estimate signal 102, which is commonly referred to as a û signal. The echo estimate signal 102 may be formed as the convolution of the far-end signal 112, and a sequence of *m* filter weighting coefficients ($h_i$) of the filter 101 (See Equation 1).

$$\hat{u}(n) = \sum_{i=0}^{i..c} h_i \cdot x(n-i) \tag{1}$$

where:

x(n) is the input signal,
m is the number of weighting coefficients, and
n is the sample number.

When the weighting coefficients are set correctly, the adaptive filter 101 produces an impulse response that is approximately equal to the response produced by the loudspeaker 109 within the unknown system H(z). The echo estimate signal 102 generated by the adaptive filter 101 is subtracted from the incoming digitized echo signal 126, to produce an echo filtered microphone signal, also referred to as an error signal $e(n)$ because its energy is entirely attributable to the error in the echo estimate signal 102 when the only sound reaching the microphone 105 is attributable to the sound emanating from the loudspeaker 109:

$$e(n) = u(n) - \hat{u}(n) \tag{2}$$

Ideally, any echo response from the unknown system H(z), introduced by the loudspeaker 109, is removed from the digitized echo signal 126 by the subtraction of the echo estimate signal 102. Consequently, when the digitized echo signal 126 also includes signal components attributable to the intended near-end user, the resulting difference signal should ideally include only these near-end user components. Typically, the number of weighting coefficients (henceforth referred to as "coefficients") required for effectively canceling an echo will depend on the application. For handheld phones, fewer than one hundred coefficients may be adequate. For a hands-free telephone in an automobile, about 200 to 400 coefficients will be required. A large room may require a filter utilizing over 1000 coefficients in order to provide adequate echo cancellation.

It can be seen that the effectiveness of the echo canceler is directly related to how well the adaptive filter 101 is able to replicate the impulse response of the unknown system H(z). This, in turn, is directly related to the set of coefficients, $h_i$, maintained by the filter 101.

It is advantageous to provide a mechanism for dynamically altering the coefficients, $h_i$, to allow the adaptive filter 101 to adapt to changes in the unknown system H(z). In a car having a hands-free cellular arrangement, such changes may occur when a window or car door is opened or closed. In fact, in this and other environments as well, changes in the unknown system H(z) can also result from any number of changes in the environment, such as movement of a person or object, or a change in the relative position or orientation of the microphone 105 and loudspeaker 109 with respect to one another. A well-known coefficient adaptation scheme is the Least Mean Square (LMS) process, which was first introduced by Widrow and Hoff in 1960, and is frequently used because of its efficiency and robust behavior. As applied to the echo cancellation problem, the LMS process is a stochastic gradient step method which uses a rough (noisy) estimate of the gradient, $\underline{g}(n) = e(n) \cdot \underline{x}(n-1)$, to make an incremental step toward minimizing the energy (and the mean square error) of the error signal, e(n), where $\underline{x}(n)$ is in vector notation corresponding to an expression $\underline{x}(n)=[x(n)\ x(n-1)\ x(n-2) \cdots x(n-m+1)]$. The update information produced by the LMS process $e(n) \cdot \underline{x}(n)$ is used to determine the value of a coefficient in a next sample. The expression for calculating a next coefficient value $h_i(n+1)$ is given by:

$$h_i(n+1) = h_i(n) + \mu e(n) \cdot x(n-i), \qquad i = 0..m-1 \tag{3}$$

where

x(n) is an nth sample of the digitized input signal 112,
$h_i(n)$ is a filter weighting coefficient,
$i$ designates a particular coefficient,
$m$ is the number of coefficients,
$n$ is the sample number, and
$\mu$ is a step or update gain parameter.

The LMS method is very common in real-time applications due to its efficiency and simplicity. It produces information in incremental portions each of which portions may have a positive or a negative value. The information produced by the LMS process can be provided to the adaptive filter 101 to update the filter's coefficients.

Referring back to FIG. 1, the exemplary conventional echo cancellation circuit includes a filter adaptation unit 103 in the form of an LMS cross correlator for providing coefficient update information 104 to the filter 101. In this arrangement, the filter adaptation unit 103 monitors the error signal $e(n)$ that represents the digitized echo signal 126 minus the echo estimate signal 102 generated by the filter 101. The echo estimate signal 102 is generated, as described above, with the use of update information 104 provided to the adaptive filter 101 by the filter adaptation unit 103. The coefficients, $h_i$, of the adaptive filter 101 accumulate the update information 104 as shown by Eq. (3).

Despite the presence of echo cancellation circuitry, such as that described above, the signals generated for further processing (e.g., for transmission to the far-end user in a communications system, or for near-end speech recognition or for controlling the operation of the echo cancellation filter 101) may very often still include echo and/or other noise components. This may occur, for example, because the adaptive filter has not yet converged to a fully adapted state, or even after such convergence whenever the unknown environment H(z) changes, thereby requiring the adaptation process to be repeated. The presence of strong echo signal components in the signal can cause degraded or even faulty operation of the down-stream processing components, since these echo signal components may be mistaken for near-end speech. For these reasons, particular applications may set requirements for echo return loss enhancement (ERLE).

In the field of cellular radio communications, the typical (linear) echo cancellation arrangement described above has problems fulfilling the ERLE requirements, which are quite high for delayed systems such as the Global System for Mobile communications (GSM) and the Digital Advanced Mobile Phone System (DAMPS). The required ERLE figure can be as high as 40-50 dB in these cases. With good audio components it might be possible to achieve 30-35 dB ERLE by means of the linear echo canceler alone. To substantially eliminate the remainder, referred to as the residual echo, some extra processing is needed. Thus, an additional noise suppressor (NS) 123 may be provided in the system to handle more serious noise and echo components in the signal to be transmitted to the far-end user.

When the components that make up the hands-free arrangement are connected as an integral part of the overall device (e.g., telecommunications device or personal computer), the designers of such equipment can optimize various parameters to suit the particular type and arrangement of the hands-free components. For example, the respective gains of the microphone and loudspeaker amplifiers 119, 117 can be set to levels that are appropriate for the particular components selected for these functions. As another example, the echo canceling algorithm can be optimized (e.g., by choosing a suitable number of taps for the filter 101, an appropriate adaptation rate of the adaptation unit 103, and so on) to suit not only the particular microphone 105 and loudspeaker 109 to be used, but also to take account of their physical relationship with respect to one another and the type of environment (e.g., automobile passenger compartment, large/small office) into which they will be placed.

It is often the case, however, that the hands-free arrangement is connected as an accessory to the main device. For example, when a user of a handheld mobile telephone (the main device in this example) wishes to use the mobile telephone in an automobile, it is not uncommon for that user to connect the mobile telephone to automobile-mounted hands-free components by means of a suitable interface. In fact, for safety reasons many governments are now passing legislation prohibiting the use of anything other than hands-free equipment when the user wishes to communicate telephonically while operating an automobile. Hands-free adapters for existing mobile communication and other devices are thus proliferating. Under these circumstances, for any given make and model of mobile telephone or other device, the particular hands-free equipment owned and operated by the user may be any of a variety of makes and models, each with its own operating/performance characteristics. For example, some loudspeakers are more efficient than others, and therefore require, for a given acoustic power output, an input signal having a lower power level than is required by a less efficient speaker. Also, some loudspeakers generate more distortion than others, and therefore require different approaches to echo cancellation. It is similarly true that microphones differ from one another in characteristics such as sensitivity and directionality.

Further differences in operating characteristics arise from whether the hands-free components are always mounted in the same way with respect to one another (e.g., whether the loudspeaker and microphone are always separated by a particular distance, and oriented in a particular direction with respect to one another) or whether this can vary. For example, in some vehicular adapters, the loudspeaker is fixed while the microphone may be one that is clipped to an article of clothing worn by the user. In such a case, the physical relationship between the loudspeaker and the microphone can vary greatly, and will certainly be unpredictable at the time that the user's main device (e.g., the mobile telephone) is being designed.

Thus, there is expected to be a wide variety of hands-free adapter kits for the user to choose from, ranging from low cost models intended to meet the demands of entry-level customers, up to the most expensive models that will provide high quality speech to both the near- and far-end users. In conventional systems, however, there is no mechanism provided for enabling the user's main equipment (e.g., the hand-held mobile phone) to distinguish one from another. As a consequence, this main equipment has to be designed assuming that the lowest quality hands-free adapter will be connected. When this is not the case, this design approach results in inefficient operation (e.g., echo cancellation algorithms that do more processing than necessary for the given equipment) and sub-optimal performance (e.g., operation with loudspeaker and microphone gain settings that are inappropriate for the actual devices being used).

U.S. Patent No. 5,036,532 discloses a portable telephone capable of discriminating between four different external accessories with power capabilities, one of which is a duplex hands-free adapter. When the telephone determines that a hands-free adapter is connected, it can change some of the settings of the telephone, such as the transmitter power level. No mention is made, however, of any capability for distinguishing between different hands-free adapters, each with its own operating characteristics. Thus, the telephone described by this reference is not capable of optimizing the performance of the telephone to suit the particular hands-free adapter being utilized.

U.S. Patent No. 5,349,698 discloses a radio communication apparatus that is capable of using a plurality of terminal units, and is capable of detecting what kind of terminal is being used. If the apparatus detects that a hands-free terminal is being used, it is capable of making corrections, such as volume adjustments. Again, however, there is no mention of any capability for distinguishing between different hands-free adapters, each with its own operating characteristics. Thus, the telephone described by this reference is not capable of optimizing the performance of the telephone to suit the particular hands-free adapter being utilized.

German Patent Publication No. DE 197 15 596 A1 discloses an adapter for adapting between a mobile telephone and a hands-free unit. The adapter includes means for adjusting parameters, such as voltage levels, to be correct for different types of telephones. However, this document does not disclose any capability of distinguishing between different types of hands-free adapters, and making different adjustments as a result of this determination.

U.S. Patent No. 5,535,274 discloses a universal connection for a cellular telephone interface. The connection provides the capability to identify the type of telephone being used, and for downloading function-related parameters to a host assembly. The document fails to disclose, however, permitting the telephone to detect what type of hands-free adapter is connected, and making suitable adjustments based on that determination.

U.S. Patent No. 5,479,479 discloses a car kit controller that determines the model of the cellular telephone that it is connected to, and adjusts some of its operating characteristics in response. Consequently, the car kit controller is capable of operating in conjunction with any of a number of different cellular telephones. This does not help the situation of the cellular telephone however, which must still be designed to work with a wide variety of hands-free adapter kits, which means that the design of the phone must assume that the lowest quality hands-free adapter will be connected. This means inefficient operation and sub-optimal performance.

## SUMMARY

It is therefore an object of the present invention to provide methods and apparatuses that permit a main device to detect what type of hands-free equipment is connected.

It is another object of the present invention to provide methods and apparatuses that permit a main device to make adjustments to one or more operating parameters based on a determination of what type of hands-free equipment is connected.

The foregoing and other objects are achieved in methods and apparatuses for operating a main device. In one aspect of the invention, a main device receives self-identifying information from a hands-free adapter, wherein the self-identifying information distinguishes the hands-free adapter from at least one other hands-free adapter.

In another aspect of the invention, the main device determines one or more settings as a function of the self-identifying information. Then, one or more components are adjusted in accordance with the one or more settings.

In yet another aspect of the invention, the self-identifying information may be make and model information. Alternatively, the self-identifying information may indicate one of a number of predefined performance classes, each of which is associated with a particular set of hands-free performance characteristics. In another alternative, the self-identifying information may indicate particular performance characteristics of the hands-free adapter.

In still another aspect of the invention, receiving self-identifying information from the hands-free adapter comprises retrieving the self-identifying information from one or more pins of a connector that links the apparatus and the hands-free adapter. Alternatively, receiving self-identifying information from the hands-free adapter may comprise receiving the self-identifying information from a wireless link between the apparatus and the hands-free adapter. In either case, this may further include establishing a serial communications link between the hands-free adapter and the apparatus; and receiving the self-identifying information via the serial communications link.

In yet another aspect of the invention, adjusting one or more components in accordance with the one or more settings comprises any one or more of the following: adjusting a gain of a microphone amplifier; adjusting a gain of a loudspeaker amplifier; adjusting one or more echo cancellation components in accordance with the one or more settings; adjusting a length of a filter that is used for echo cancellation; adjusting a filter adaptation rate of a filter that is used for echo cancellation; adjusting operation of a noise canceler in the apparatus; adjusting operation of a near-end voice detector in the apparatus; adjusting operation of a communication filter in the apparatus; setting the apparatus to operate in a full duplex mode; and setting the apparatus to operate in a semi-duplex mode.

In still another aspect of the invention, the hands-free adapter includes an interface and means for supplying self-identifying information to the interface. In some embodiments, the means for supplying self-identifying information to the interface may be a collection of one or more connector pins that are hard-wired to represent the self-identifying information. In alternative embodiments, the means for supplying self-identifying information to the interface may be a programmable controller.

## BRIEF DESCRIPTION OF THE DRAWINGS

The objects and advantages of the invention will be understood by reading the following detailed description in conjunction with the drawings in which:

FIG. 1 is a block diagram of a conventional hands-free transceiver that includes an acoustic echo canceler in the form of an adaptive filter arrangement;
FIG. 2 is a block diagram of an exemplary embodiment of the invention; and
FIG. 3 is a flow chart depicting steps performed by a main device in accordance with one aspect of the invention.

## DETAILED DESCRIPTION

The various features of the invention will now be described with respect to the figures, in which like parts are identified with the same reference characters.

In accordance with one aspect of the invention, hands-free adaptors are provided with a capability of supplying self-identifying information to a main device, wherein the self-identifying information distinguishes the hands-free adapter from at least one other hands-free adapter. The self-identifying information may be generated by including within the hands-free adaptor dedicated lines that are hardwired to predefined digital values (i.e., one's and zeroes) or alternatively by including within the hands-free adaptor a processor that generates the self-identifying information dynamically. The self-identifying information may be communicated to the main device by means of a physical connection, or via wireless means.

In accordance with other aspects of the invention, the main device uses the hands-free adaptor's self-identifying information to determine one or more settings to which elements of the main device are adjusted.

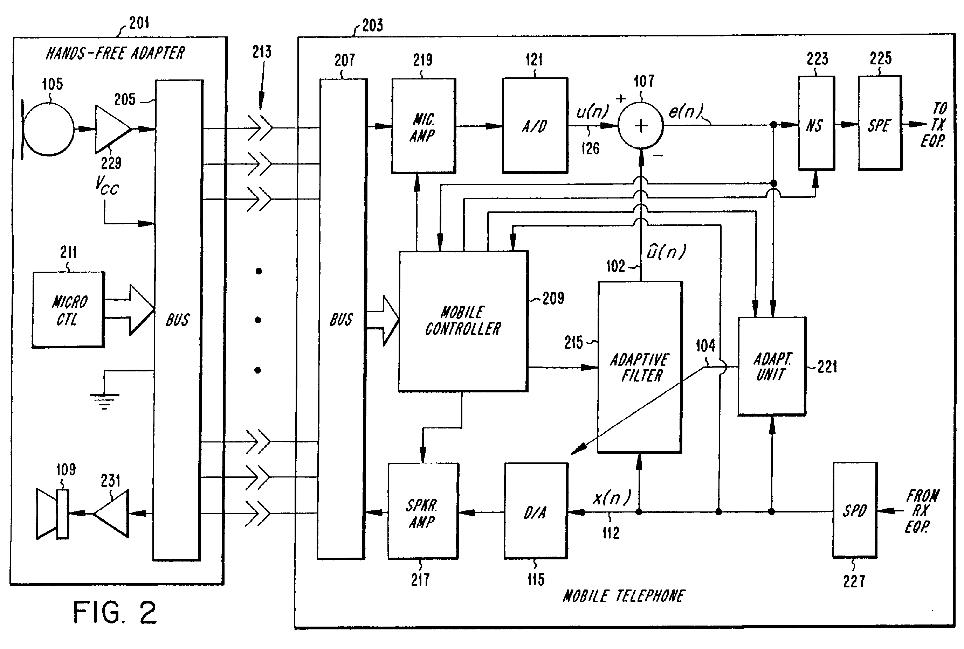

These and other aspects of the invention will now be described in greater detail with reference to an exemplary embodiment, a block diagram of which is depicted in FIG. 2. In the exemplary embodiment, the main device is a mobile telephone. In alternative embodiments, the main device could be a different type of equipment, such as a personal computer running a communications program or even a speech recognition program. In these alternatives, the principles of receiving the hands-free adaptor's self-identifying information and making suitable adjustments to components of the main device are equally applicable, even if the particular components to be adjusted and the particulars of the adjustments are different from those typically found in a mobile telephone. Accordingly, the invention is not to be considered limited to the exemplary embodiments described herein.

Turning now to FIG. 2, a mobile telephone 203 is shown with a connector 213 that enables a bus 207 on the mobile telephone 203 to be coupled to a bus 205 located in a hands-free adapter 201. When not connected to the hands-free adapter 201, the mobile telephone 203 permits a near-end user to hear and speak to a far-end user by means of its own microphone and loudspeaker/earphone (not shown). These may be automatically disconnected using any of a number of well-known techniques, however, when the hands-free adapter 201 is connected to the connector 213. The hands-free adapter 201 includes a loudspeaker 109 for reproducing audio generated by a far-end user. The hands-free adapter 201 further includes a microphone 105 to convert the nearby acoustic sounds into a corresponding signal that may be processed and transmitted to the far-end user. The hands-free adapter 201 very commonly also includes a power amplifier 231 for the loudspeaker 109. This is a requirement in those embodiments that employ a wireless connection between the hands-free adapter 201 and the mobile telephone 203. The hands-free adapter 201 also very commonly includes a microphone preamplifier 229.

In order to generate a loudspeaker signal having an appropriate power level, the mobile telephone includes a speaker amplifier 217 having an adjustable gain. The mobile telephone 203 also includes a microphone amplifier 219 having an adjustable gain that permits a microphone signal to be generated at a suitable level, as will be described in greater detail below.

In order to address the acoustic echo problem described in the BACKGROUND section of this disclosure, the mobile telephone 203 further includes echo cancellation components including an adaptive filter 215, filter adaptation unit 221, and subtractor 107 arranged to generate an estimated echo signal 102 that is subtracted from a digital microphone signal 126, as described earlier. The mobile telephone 203 may further include a noise suppression unit 223, although this is not required. In this embodiment, a near-end audio signal is supplied to a speech encoder 225, which generates an encoded speech signal that is supplied to other transmitter components (not shown) for transmission to the far-end user. The far-end signal (from which is derived a signal to be supplied to the loudspeaker) is received by receiver components (not shown) in the mobile telephone 203. The far-end signal is supplied to a speech decoder 227, which generates the digital input signal 112 which is processed as described earlier.

In accordance with one aspect of the invention, the hands-free adapter 201 supplies self-identifying information to the mobile telephone 203, wherein the self-identifying information distinguishes the hands-free adapter from at least one other hands-free adapter. This information may take on many different forms, depending on the particular application. For example, the self-identifying information may be in the form of make and model identifying information. The mobile telephone 203 in this case needs to store a table so that it can look up the particular make and mode and determine what steps to take.

This approach has a drawback, however, in that if the mobile telephone's table is static, it may fail to recognize later-developed makes and models. In order to avoid this problem, and to avoid having to periodically update the mobile telephone's table, an alternative embodiment of the information may be used, in which the information includes detailed performance information about the particular microphone, loudspeaker and other components included in the hands-free adapter 201. An advantage of this approach is that the information can be as precise and detailed as desired. A disadvantage is that it may require a mechanism that permits a larger quantity of information to be communicated between the hands-free adapter 201 and the mobile telephone 203.

In yet another embodiment, the self-identifying information may identify one of a number of predefined performance classes of hands-free adapters. The performance classes may be predefined to describe a range of hands-free adapters of varying quality, ranging from very low-en models (usually of lower quality) to very high-end models (usually of very high quality). This approach avoids the problem of the mobile telephone 203 not recognizing a later-developed model of hands-free adapter 201, since even later developed models can be assigned a performance class that competently describes their performance characteristics. This approach further permits the pertinent information to be communicated between the hands-free adapter 201 and the mobile telephone 203 by means of very few bits (i.e., binary digits), since the information is essentially encoded.

In still other embodiments, combinations of the above types of self-identifying information can be used. For example, a hands-free adapter 201 may not be exactly described by any of the predefined performance classes. In such a case, a solution can be employed in which the hands-free adapter 201 communicates performance class information in combination with additional information. The communicated performance class may correspond to the performance class that most closely describes the hands-free adapter 201. The additional information can be just that information necessary to specify how the hands-free adapter 201 differs from the predefined performance class.

Just as the self-identifying information may take any of a number of forms, so too may alternative techniques be used for communicating the self-identifying information between the hands-free adapter 201 and the mobile telephone 203. In what is perhaps a simplest technique, one or more pins on the connector 213 may be dedicated to representing the information. Here, some pins would be tied to, say, a high voltage level (e.g., $V_{CC}$, or car battery voltage) in order to represent a binary '1', while other ones of the dedicated pins would be tied to ground for the purpose of representing a binary '0'. Together, the combination of '1's and '0's may represent, say, the performance class that best describes the hands-free adapter 201.

In an alternative embodiment, the hands-free adapter 201 may include a micro-controller 211 or other processor that generates the self-identifying information and transmits this to a mobile controller 209 or other processor in the mobile telephone 203. This communication is preferably performed by means of a serial communications link between the hands-free adapter 201 and the mobile telephone 203, although alternative techniques can also be used. The communications link itself can be by means of one or more dedicated lines on the connector 213. In alternative embodiments, however, a wireless connection is established between the hands-free adapter 201 and the mobile telephone 203, instead of the illustrated connector 213. A wireless connection can be established and used in accordance with Bluetooth technology, which is a publicly available open specification for wireless communication of data and voice. Bluetooth specifications specify a system solution comprising hardware, software and interoperability requirements. Bluetooth equipment operates in a globally available 2.4 Ghz Industrial, Scientific and Medical (ISM) radiofrequency band, ensuring communication compatibility worldwide. Connections between Bluetooth-compatible devices are established almost-instantaneously, and are maintained even when devices are not within line of sight. The range of each radio is approximately 10 meters, but it can be extended to approximately 100 meters with an optional amplifier.

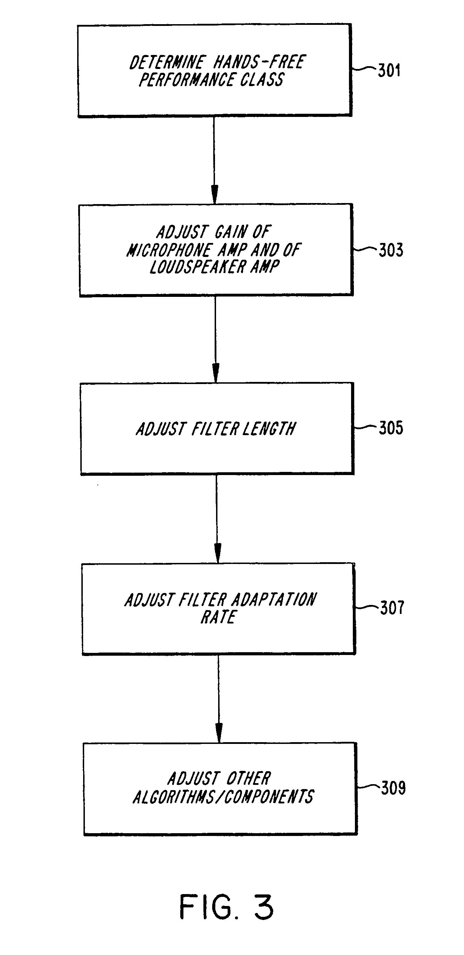

In one aspect of the invention, then, the hands-free adapter 201 provides self-identifying information to the mobile telephone 203. The self-identifying information is sufficient to permit the mobile telephone 203 to determine pertinent performance characteristics of the hands-free adapter 201. Another aspect of the invention relates to what the mobile telephone 203 does with this information. This aspect of the invention will be described with reference to the exemplary mobile telephone 203 depicted in FIG. 2 in conjunction with the flow chart depicted in FIG. 3. To facilitate an understanding of the invention, it will be assumed here that the hands-free adapter communicates a performance class identifier to the mobile controller 209 located in the mobile telephone 203. In other embodiments, however, the self-identifying information could take any of a number of alternative forms, as described earlier.

In step 301, the mobile controller 209 receives the hands-free adapter's self-identifying information in the form of a hands-free adapter performance class identifier. The mobile controller 209 uses this to optimize a number of settings in the mobile telephone 203 so that the most efficient settings can be used to attain the peak performance from this particular hands-free adapter 201.

In step 303, the mobile controller 209 adjusts the gain of the microphone amplifier 219 and of the loudspeaker amplifier 217. These settings, which are determined in advance for this particular performance class of hands-free equipment, ensure optimal performance with respect to saturation, interference and distortion associated with the microphone 105 and the loudspeaker 109.

In step 305, the length of the filter (i.e., the number of taps) is adjusted to best suit the performance class of hands-free equipment indicated by the hands-free adapter's self-identifying information. This step is performed out of recognition that lower quality hands-free equipment may require more filtering processing (i.e., more taps) than higher quality hands-free equipment. In order to avoid unnecessary echo-cancellation processing when less is required, thereby avoiding an unnecessary consumption of power (which is important, for example, when the mobile telephone has a wireless connection with the hands-free adapter 201, thereby eliminating the possibility of access to an external power supply) and longer processing time (including a longer time to achieve adaptive filter convergence which means a longer period of sub-optimal echo cancellation performance), the mobile controller 209 adjusts the filter algorithm so that it will do no more than what is required. For example, a performance class indicative of an office-based hands-free accessory will require a greater echo cancellation filter length than will be required for a performance class indicative of a headset. Depending on the particular embodiment, this filter length adjustment may comprise selecting or de-selecting physically implemented taps of a filter, or it may alternatively be an adjustment to one or more parameters stored in a memory, which parameters control the operation of a filtering program that is run on the mobile controller 209 or another processor located in the mobile telephone 203.

In step 307, the rate of filter adaptation (performed by the filter adaptation unit 221) is adjusted to suit the particular hands-free adapter 201. Again, this is performed because different hands-free adapter's have different echo characteristics. These differences arise not only from the quality differences between different kinds of microphones and different kinds of loudspeakers, but also because of installation distances that different hands-free adapter kits impose between microphone and loudspeaker, between microphone and mouth, and between loudspeaker and ear.

In step 309, other algorithms/components are adjusted to best suit the particular hands-free adapter 201 that is to operate with the mobile telephone 203. Such other algorithms/components include, but are not limited to, noise canceler, near-end voice detectors, other communication filters (uplink and downlink). The type of hands-free adapter 201 (which may always be associated with installation in a particular type of acoustic environment) may also cause the mobile telephone 203 to change from a full duplex hands-free operation, in which the microphone 105 and loudspeaker 109 are always active at the same time, to semi-duplex hands-free operation, in which the loudspeaker 109 and microphone 105 take turns at being activated. In semi-duplex hands-free operation, the mobile controller 209 (or other controller/processor in the mobile telephone 203) may sense whether a far-end speech signal or a near-end speech signal has higher energy, and block transmission of the weaker signal.

In the above example, a number of mobile telephone settings were adjusted as a function of what type of hands-free adapter 201 was being employed. It will be recognized, however, that each of these exemplary settings need not always be adjusted in every embodiment. Rather, alternative embodiments may be devised in which only some of the exemplary adjustments are made. Furthermore, other types of adjustments, not illustrated here, may also be made as a function of the type of hands-free adapter 201 being employed.

The invention has been described with reference to particular embodiments. However, it will be readily apparent to those skilled in the art that it is possible to embody the invention in specific forms other than those of the preferred embodiments described above.

For example, in the illustrated embodiments, the main device is a mobile telephone. However, this is not an essential feature of the invention. Rather, the invention can be practiced in any type of device that is capable of utilizing any of a variety of hands-free adapters.

It is apparent from the above that the quality difference between the least-and most-expensive hands-free adapters is extreme. Furthermore, the installation distances between microphone and loudspeaker, between microphone and mouth, and between loudspeaker and ear are also very different, depending on the particular accessory selected.

In conventional main devices (e.g, mobile telephones), the particular type of hands-free equipment being utilized is unknown. Consequently, the amplifier gain, echo cancellation and other algorithms and components are designed to work with the worst case situation, which means the lowest quality hands-free equipment and the worst case installation environment. This often results in a negative influence on the performance of the high-end hands-free adapter.

The invention addresses these problems by permitting the main device to dynamically optimize internal settings to suit the particular hands-free adapter being employed.

In another aspect of the invention, a range of main devices (e.g., different models of mobile telephones) can be offered to the public, which main devices are associated with different qualities of performance. For example, a low-end mobile telephone can be designed to disable noise cancellation components unless it detects that it is connected to the highest-quality hands-free adapter 201. By contrast, a high-end mobile telephone can have the noise cancellation components always enabled, regardless of the type of hands-free adapter being employed.

Furthermore, it will be recognized that the invention can be practiced in conjunction with a wide variety of hands-free adapters 201. These include, but are not limited to: portable hands-free adapters (e.g., headsets), both wire and wireless; vehicle hands-free adapters, ranging from inexpensive easy-to-install kits up to more expensive fixed-mounted high-end kits; and office hands-free adapters, ranging from inexpensive desktop equipment to high-end conferencing equipment.

Thus, the preferred embodiments are merely illustrative and should not be considered restrictive in any way. The scope of the invention is given by the appended claims, rather than the preceding description, and all variations and equivalents which fall within the range of the claims are intended to be embraced therein.

**Claims**

1. A method of operating an apparatus (203), comprising the steps of:

   receiving (213) self-identifying information from a hands-free adapter (201), wherein the self-identifying information distinguishes the hands-free adapter (201) from at least one other hands-free adapter;
   determining (301) one or more settings as a function of the self-identifying information; and
   adjusting (303, 305, 307, 309) one or more echo cancellation components (215, 221) in the apparatus in accordance with the one or more settings.

2. The method of claim 1, wherein the self-identifying information is make and model information.

3. The method of claim 1, wherein the self-identifying information indicates one of a number of predefined performance classes, each of which is associated with a particular set of hands-free performance characteristics.

4. The method of claim 1, wherein the self-identifying information indicates particular performance characteristics of the hands-free adapter (201).

5. The method of claim 1, wherein the step of receiving (213) self-identifying information from the hands-free adapter (201) comprises the step of retrieving the self-identifying information from one or more pins of a connector that links the apparatus (203) and the hands-free adapter (201).

6. The method of claim 1, wherein the step of receiving (213) self-identifying information from the hands-free adapter (201) comprises the step of receiving the self-identifying information from a wireless link between the apparatus (203) and the hands-free adapter (201).

7. The method of claim 1, wherein the step of receiving (213) self-identifying information from the hands-free adapter (201) comprises the steps of:

   establishing a serial communications link between the hands-free adapter (201) and the apparatus (203); and
   receiving the self-identifying information via the serial communications link.

8. The method of claim 1, further comprising adjusting (303, 305, 307, 309) a gain of a microphone amplifier (229) in accordance with the one or more settings.

9. The method of claim 1, further comprising adjusting (303, 305, 307, 309) a gain of a loudspeaker amplifier (231) in accordance with the one or more settings.

10. The method of claim 1, further comprising adjusting (303, 305, 307, 309) a length of a filter (215) that is used for echo cancellation in accordance with the one or more settings.

11. The method of claim 1, further comprising adjusting (303, 305, 307, 309) a filter adaptation rate (221) of a filter that is used for echo cancellation in accordance with the one or more settings.

12. The method of claim 1, further comprising adjusting (303, 305, 307, 309) operation of a noise canceler (223) in the apparatus (203) in accordance with the one or more settings.

13. The method of claim 1, further comprising adjusting (303, 305, 307, 309) operation of a near-end voice detector in the apparatus (203) in accordance with the one or more settings.

14. The method of claim 1, further comprising adjusting (303, 305, 307, 309) operation of a communication filter in the apparatus (203) in accordance with the one or more settings.

15. The method of claim 1, further comprising setting the apparatus (203) to operate in a full duplex mode in accordance with the one or more settings.

16. The method of claim 1, further comprising setting the apparatus (203) to operate in a semi-duplex mode in accordance with the one or more settings.

17. An apparatus (203) comprising:

    an input (213) adapted to receive self-identifying information from a hands-free adapter (201), wherein the self-identifying information is adapted to distinguish the hands-free adapter (201) from at least one other hands-free adapter; and
    a controller adapted to determine (301) one or more settings as a function of the self-identifying information, and adjust (303, 305, 307, 309) one or more echo cancellation components (215, 221) in the apparatus (203) in accordance with the one or more settings.

18. The apparatus (203) of claim 17, wherein the self-identifying information is make and model information.

19. The apparatus (203) of claim 17, wherein the self-identifying information indicates one of a number of predefined performance classes, each of which is associated with a particular set of hands-free performance characteristics.

20. The apparatus (203) of claim 17, wherein the self-identifying information indicates particular performance characteristics of the hands-free adapter (201).

21. The apparatus (203) of claim 17, wherein the input (213) adapted to receive self-identifying information from the hands-free adapter (201) comprises one or more pins of a connecter that links the apparatus (203) and the hands-free adapter (201).

22. The apparatus (203) of claim 17, wherein the input (213) adapted to receive self-identifying information from the hands-free adapter (201) comprises radio elements adapted to establish a wireless link between the apparatus (203) and the hands-free adapter (201) and to receive the self-identifying information from the wireless link.

23. The apparatus (203) of claim 17, wherein the input (213) adapted to receive the self-identifying information from the hands-free adapter (201) comprises:

    a communication element adapted to establish a serial communications link between the hands-free adapter (201) and the apparatus (203); and
    an input adapted to receive the self-identifying information via the serial communications link.

24. The apparatus (203) of claim 17, wherein the controller is further adapted to adjust (303, 305, 307, 309) a gain of a microphone amplifier (229) in accordance with the one or more settings.

25. The apparatus (203) of claim 17, wherein the controller is further adapted to adjust (303, 305, 307, 309) a gain of a loudspeaker amplifier (231) in accordance with the one or more settings.

26. The apparatus (203) of claim 17, wherein the controller is further adapted to adjust (303, 305, 307, 309) a length of a filter (215) that is used for echo cancellation in accordance with the one or more settings.

27. The apparatus (203) of claim 17, wherein the controller is further adapted to adjust (303, 305, 307, 309) a filter adaptation rate (221) of a filter that is used for echo cancellation in accordance with the one or more settings.

28. The apparatus (203) of claim 17, wherein the controller is further adapted to adjust (303, 305, 307, 309) operation of a noise canceler (223) in the apparatus (203) in accordance with the one or more settings.

29. The apparatus (203) of claim 17, wherein the controller is further adapted to adjust (303, 305, 307, 309) operation of a near-end voice detector in the apparatus (203) in accordance with the one or more settings.

30. The apparatus (203) of claim 17, wherein the controller is further adapted to adjust (303, 305, 307, 309) operation of a communication filter in the apparatus (203) in accordance with the one or more settings.

31. The apparatus (203) of claim 17, wherein the controller is further adapted to adjust (303, 305, 307, 309) the apparatus (203) to operate in a full duplex mode in accordance with the one or more settings.

32. The apparatus (203) of claim 17, wherein the controller is further adapted to adjust (303, 305, 307, 309) the apparatus (203) to operate in a semi-duplex mode in accordance with the one or more settings.

33. The apparatus (203) of claim 17, wherein the apparatus (203) is a telephone.

34. The apparatus (203) of claim 33, wherein the telephone is a mobile telephone.

35. The apparatus (203) of claim 33, wherein the one or more echo cancellation components include an acoustic echo canceler.

36. The apparatus (203) of claim 17, wherein the apparatus (203) is a general purpose digital computer.

37. A system comprising:

> an apparatus (203) as claimed in claim 33 or 34; and
> a hands-free adapter (201) comprising:
>
>> a microphone (105);
>> a loudspeaker (109);
>> an interface (213) for coupling to the telephone; and
>> means for supplying self-identifying information to the interface (213), wherein the self-identifying information distinguishes the hands-free adapter (201) from at least one other hands-free adapter.

38. The system of claim 37, wherein the means for supplying self-identifying information to the interface is a collection of one or more connector pins that are hard-wired to represent the self-identifying information.

39. The system of claim 37, wherein the means for supplying self-identifying information to the interface is a programmable controller (211).


**Patentansprüche**

1. Verfahren zum Betreiben einer Vorrichtung (203), die Schritte umfassend:

> Empfangen (213) von selbstidentifizierender Information von einem Freisprechadapter (201), wobei die selbstidentifizierende Information den Freisprechadapter (201) von zumindest einem anderen Freisprechadapter unterscheidet;
> Bestimmen (301) einer oder mehrerer Einstellungen als eine Funktion der selbstidentifizierenden Information; und
> Anpassen (303, 305, 307, 309) einer oder mehrerer Echolöschungskomponenten (215, 221) in der Vorrichtung, in Übereinstimmung mit einer oder mehrerer Einstellungen.

2. Verfahren nach Anspruch 1, wobei die selbstidentifizierende Information eine Herstellungs- und Modell-Information ist.

3. Verfahren nach Anspruch 1, wobei die selbstidentifizierende Information eine aus einer Anzahl von vorbestimmten Performance-Klassen anzeigt, wobei jede davon mit einem bestimmten Satz von Freisprech-Performance-Merkmalen verbunden ist.

4. Verfahren nach Anspruch 1, wobei die selbstidentifizierende Information bestimmte Performance-Merkmale des Freisprechadapters (201) anzeigt.

5. Verfahren nach Anspruch 1, wobei der Schritt zum Empfangen (213) selbstidentifizierender Information von dem Freisprechadapter (201) den Schritt zum Abrufen der selbstidentifizierenden Information von einem oder mehreren Anschlüssen einer Verbindungseinheit umfasst, die die Vorrichtung (203) und den Freisprechadapter (201) verbinden.

6. Verfahren nach Anspruch 1, wobei der Schritt zum Empfangen (213) selbstidentifizierender Information von dem Freisprechadapter (201) den Schritt zum Empfangen der selbstidentifizierenden Information von einer drahtlosen Verbindung zwischen der Vorrichtung (203) und dem Freisprechadapter (201) umfasst.

7. Verfahren nach Anspruch 1, wobei der Schritt zum Empfangen (213) selbstidentifizierender Information von dem Freisprechadapter (201) die Schritte umfasst:

   Einrichten einer seriellen Kommunikationsverbindung zwischen dem Freisprechadapter (201) und der Vorrichtung (203); und
   Empfangen der selbstidentifizierenden Information über die serielle Kommunikationsverbindung.

8. Verfahren nach Anspruch 1, ferner ein Anpassen (303, 305, 307, 309) einer Verstärkung eines Mikrofonverstärkers (229) in Übereinstimmung mit der einen oder den mehreren Einstellungen umfassend.

9. Verfahren nach Anspruch 1, ferner ein Anpassen (303, 305, 307, 309) einer Verstärkung eines Lautsprecherverstärkers (231) in Übereinstimmung mit der einen oder den mehreren Einstellungen umfassend.

10. Verfahren nach Anspruch 1, ferner ein Anpassen (303, 305, 307, 309) einer Länge eines Filters (215) umfassend, der in Übereinstimmung mit der einen oder den mehreren Einstellungen zur Echolöschung verwendet wird.

11. Verfahren nach Anspruch 1, ferner ein Anpassen (303, 305, 307, 309) einer Anpassungsrate (221) eines Filters umfassend, der in Übereinstimmung mit der einen oder den mehreren Einstellungen zur Echolöschung verwendet wird.

12. Verfahren nach Anspruch 1, ferner ein Anpassen (303, 305, 307, 309) des Betriebs einer Rauschlöscheinrichtung (223) in der Vorrichtung (203) in Übereinstimmung mit der einen oder den mehreren Einstellungen umfassend.

13. Verfahren nach Anspruch 1, ferner ein Anpassen (303, 305, 307, 309) des Betriebs eines Nahend-Sprachdetektors in der Vorrichtung (203) in Übereinstimmung mit der einen oder den mehreren Einstellungen umfassend.

14. Verfahren nach Anspruch 1, ferner ein Anpassen (303, 305, 307, 309) des Betriebs eines Kommunikationsfilters in der Vorrichtung (203) in Übereinstimmung mit der einen oder den mehreren Einstellungen umfassend.

15. Verfahren nach Anspruch 1, ferner ein Einstellen der Vorrichtung (203) zum Betreiben in einem vollständigen Duplexmodus in Übereinstimmung mit der einen oder den mehreren Einstellungen umfassend.

16. Verfahren nach Anspruch 1, ferner ein Einstellen der Vorrichtung (203) zum Betreiben in einem Semi-Duplexmodus in Übereinstimmung mit der einen oder den mehreren Einstellungen umfassend.

17. Vorrichtung (203), umfassend:

eine Eingabeeinrichtung (213), die zum Empfangen von selbstidentifizierender Information von einem Freisprechadapter (201) ausgelegt ist, wobei die selbstidentifizierende Information ausgelegt ist, den Freisprechadapter (201) von zumindest einem anderen Freisprechadapter zu unterscheiden; und

eine Steuereinrichtung, die zum Bestimmen (301) einer oder mehrerer Einstellungen als eine Funktion der selbstidentifizierenden Information ausgelegt ist und zum Anpassen (303, 305, 307, 309) einer oder mehrerer Echo-Löschungskomponenten (215, 221) in der Vorrichtung (203), in Übereinstimmung mit der einen oder den mehreren Einstellungen.

18. Vorrichtung (203) nach Anspruch 17, wobei die selbstidentifizierende Information eine Herstellungs- und Model-Information ist.

19. Vorrichtung (203) nach Anspruch 17, wobei die selbstidentifizierende Information eine aus einer Anzahl von vorbestimmten Performance-Klassen anzeigt, wobei jede davon mit einem bestimmten Satz von Freisprech-Performance-Merkmalen verbunden ist.

20. Vorrichtung (203) nach Anspruch 17, wobei die selbstidentifizierende Information bestimmte Performance-Merkmale des Freisprechadapters (201) anzeigt.

21. Vorrichtung (203) nach Anspruch 17, wobei die Eingabeeinrichtung (213), die zum Empfangen selbstidentifizierender Information von dem Freisprechadapter (201) ausgelegt ist, einen oder mehrere Anschlüsse einer Verbindungseinheit umfasst, die die Vorrichtung (203) und den Freisprechadapter (201) verbindet.

22. Vorrichtung (203) nach Anspruch 17, wobei die Eingabeeinrichtung (213), die zum Empfangen selbstidentifizierender Information von dem Freisprechadapter (201) ausgelegt ist, Funkelemente umfasst, die ausgelegt sind, eine drahtlose Verbindung zwischen der Vorrichtung (203) und dem Freisprechadapter (201) einzurichten und die selbstidentifizierende Information von der drahtlosen Verbindung zu empfangen.

23. Vorrichtung (203) nach Anspruch 17, wobei die Eingabeeinrichtung (213), die zum Empfangen selbstidentifizierender Information von dem Freisprechadapter (201) ausgelegt ist, umfasst:

ein Kommunikationselement, das zum Einrichten einer seriellen Kommunikationsverbindung zwischen dem Freisprechadapter (201) und der Vorrichtung (203) ausgelegt ist; und
eine Eingabeeinrichtung, die zum Empfangen der selbstidentifizierenden Information über die serielle Kommunikationsverbindung ausgelegt ist.

24. Vorrichtung (203) nach Anspruch 17, wobei die Steuereinrichtung ferner zum Anpassen (303, 305, 307, 309) einer Verstärkung eines Mikrofonverstärkers (229) in Übereinstimmung mit der einen oder den mehreren Einstellungen ausgelegt ist.

25. Vorrichtung (203) nach Anspruch 17, wobei die Steuereinrichtung ferner zum Anpassen (303, 305, 307, 309) einer Verstärkung eines Lautsprecherverstärkers (231) in Übereinstimmung mit der einen oder den mehreren Einstellungen ausgelegt ist.

26. Vorrichtung (203) nach Anspruch 17, wobei die Steuereinrichtung ferner zum Anpassen (303, 305, 307, 309) einer Länge eines Filters (215) ausgelegt ist, der zur Echolöschung in Übereinstimmung mit der einen oder den mehreren Einstellungen verwendet wird.

27. Vorrichtung (203) nach Anspruch 17, wobei die Steuereinrichtung ferner zum Anpassen (303, 305, 307, 309) einer Filter-Anpassungsrate (221) eines Filters ausgelegt ist, der zur Echolöschung in Übereinstimmung mit der einen oder den mehreren Einstellungen verwendet wird.

28. Vorrichtung (203) nach Anspruch 17, wobei die Steuereinrichtung ferner zum Anpassen (303, 305, 307, 309) des Betriebs einer Rauschlöschungseinrichtung (223) in der Vorrichtung (203) in Übereinstimmung mit der einen oder den mehreren Einstellungen ausgelegt ist.

29. Vorrichtung (203) nach Anspruch 17, wobei die Steuereinrichtung ferner zum Anpassen (303, 305, 307, 309) des Betriebs eines Nahend-Sprachdetektors in der Vorrichtung (203) in Übereinstimmung mit der einen oder den mehreren Einstellungen ausgelegt ist.

30. Vorrichtung (203) nach Anspruch 17, wobei die Steuereinrichtung ferner zum Anpassen (303, 305, 307, 309) des Betriebs eines Kommunikationsfilters in der Vorrichtung (203) in Übereinstimmung mit der einen oder den mehreren Einstellungen ausgelegt ist.

31. Vorrichtung (203) nach Anspruch 17, wobei die Steuereinrichtung ferner zum Anpassen (303, 305, 307, 309) der Vorrichtung (203) für den Betrieb in einem vollständigen Duplexmodus in Übereinstimmung mit der einen oder den mehreren Einstellungen ausgelegt ist.

32. Vorrichtung (203) nach Anspruch 17, wobei die Steuereinrichtung ferner zum Anpassen (303, 305, 307, 309) der Vorrichtung (203) für den Betrieb in einem Semi-Duplexmodus in Übereinstimmung mit der einen oder den mehreren Einstellungen ausgelegt ist.

33. Vorrichtung (203) nach Anspruch 17, wobei die Vorrichtung (203) ein Telefon ist.

34. Vorrichtung (203) nach Anspruch 33, wobei das Telefon ein Mobiltelefon ist.

35. Vorrichtung (203) nach Anspruch 33, wobei die eine oder die mehreren Echolöschungskomponenten eine akustische Echolöscheinrichtung beinhaltet.

36. Vorrichtung (203) nach Anspruch 17, wobei die Vorrichtung (203) ein universeller digitaler Computer ist.

37. System, umfassend:

   eine Vorrichtung (203) nach Anspruch 33 oder 34; und
   einen Freisprechadapter (201), umfassend:

   ein Mikrofon (105);
   einen Lautsprecher (109);
   eine Schnittstelle (213) zum Verbinden mit dem Telefon; und
   eine Einrichtung zum Bereitstellen der selbstidentifizierenden Information an der Schnittstelle (213), wobei die selbstidentifizierende Information den Freisprechadapter (201) von zumindest einem anderen Freisprechadapter unterscheidet.

38. System nach Anspruch 37, wobei die Einrichtung zum Bereitstellen selbstidentifizierender Information eine Sammlung von einem oder mehreren Verbindungsanschlüssen ist, die festverdrahtet sind, um die selbstidentifizierende Information darzustellen.

39. System nach Anspruch 37, wobei die Einrichtung zur Bereitstellung selbstidentifizierender Information an der Schnittstelle eine programmierbare Steuereinrichtung (211) ist.

**Revendications**

1. Procédé pour faire fonctionner un appareil (203), comprenant les étapes qui consistent :

   à recevoir (213) une information d'auto-identification depuis un adaptateur mains libres (201), l'information d'auto-identification distinguant l'adaptateur mains libres (201) d'au moins un autre adaptateur mains libres ;
   à déterminer (301) un ou plusieurs réglages en fonction de l'information d'auto-identification ; et
   à ajuster (303, 305, 307, 309) un ou plusieurs composants (215, 221) d'annulation d'écho dans l'appareil en fonction du ou des réglages.

2. Procédé selon la revendication 1, dans lequel l'information d'auto-identification est une information de marque et de modèle.

3. Procédé selon la revendication 1, dans lequel l'information d'auto-identification indique l'une d'un nombre de classes de performances prédéfinies, dont chacune est associée à un ensemble particulier de caractéristiques de performances mains libres.

**4.** Procédé selon la revendication 1, dans lequel l'information d'auto-identification indique des caractéristiques de performances particulières de l'adaptateur mains libres (201).

**5.** Procédé selon la revendication 1, dans lequel l'étape de réception (213) de l'information d'auto-identification depuis l'adaptateur mains libres (201) comprend l'étape de récupération de l'information d'auto-identification à partir d'une ou plusieurs broches d'un connecteur qui relie l'appareil (203) et l'adaptateur mains libres (201).

**6.** Procédé selon la revendication 1, dans lequel l'étape de réception (213) de l'information d'auto-identification depuis l'adaptateur mains libres (201) comprend l'étape de réception de l'information d'auto-identification depuis une liaison sans fil entre l'appareil (203) et l'adaptateur mains libres (201).

**7.** Procédé selon la revendication 1, dans lequel l'étape de réception (213) de l'information d'auto-identification depuis l'adaptateur mains libres (201) comprend les étapes qui consistent :

à établir une liaison de communications en série entre l'adaptateur mains libres (201) et l'appareil (203) ; et
à recevoir l'information d'auto-identification par l'intermédiaire de la liaison de communications en série.

**8.** Procédé selon la revendication 1, comprenant en outre l'ajustement (303, 305, 307, 309) d'un gain d'un amplificateur (229) de microphone conformément au réglage ou aux réglages.

**9.** Procédé selon la revendication 1, comprenant en outre l'ajustement (303, 305, 307, 309) d'un gain d'un amplificateur (231) de haut-parleur conformément au réglage ou aux réglages.

**10.** Procédé selon la revendication 1, comprenant en outre l'ajustement (303, 305, 307, 309) d'une longueur d'un filtre (215) qui est utilisé pour une annulation d'écho conformément au réglage ou aux réglages.

**11.** Procédé selon la revendication 1, comprenant en outre l'ajustement (303, 305, 307, 309) d'un taux (221) d'adaptation de filtre d'un filtre qui est utilisé pour une annulation d'écho conformément au réglage ou aux réglages.

**12.** Procédé selon la revendication 1, comprenant en outre l'ajustement (303, 305, 307, 309) du fonctionnement d'un élément d'annulation de bruit (223) dans l'appareil (203) conformément au réglage ou aux réglages.

**13.** Procédé selon la revendication 1, comprenant en outre l'ajustement (303, 305, 307, 309) du fonctionnement d'un détecteur de voix de l'extrémité proche dans l'appareil (203) conformément au réglage ou aux réglages.

**14.** Procédé selon la revendication 1, comprenant en outre l'ajustement (303, 305, 307, 309) du fonctionnement d'un filtre de communication dans l'appareil (203) conformément au réglage ou aux réglages.

**15.** Procédé selon la revendication 1, comprenant en outre le réglage de l'appareil (203) pour qu'il fonctionne en mode duplex conformément au réglage ou aux réglages.

**16.** Procédé selon la revendication 1, comprenant en outre le réglage de l'appareil (203) pour qu'il fonctionne en mode en alternat conformément au réglage ou aux réglages.

**17.** Appareil (203) comportant :

une entrée (213) conçue pour recevoir une information d'auto-identification provenant d'un adaptateur mains libres (201), dans lequel l'information d'auto-adaptation est conçue pour distinguer l'adaptateur mains libres (201) d'au moins un autre adaptateur mains libres ; et
une unité de commande conçue pour déterminer (301) un ou plusieurs réglages en fonction de l'information d'auto-identification, et pour ajuster (303, 305, 307, 309) un ou plusieurs composants (215, 221) d'annulation d'écho dans l'appareil (203) conformément au réglage ou aux réglages.

**18.** Appareil (203) selon la revendication 17, dans lequel l'information d'auto-identification est une information de marque et de modèle.

**19.** Appareil (203) selon la revendication 17, dans lequel l'information d'auto-identification indique l'une d'un certain nombre de classes de performances prédéfinies, dont chacune est associée à un ensemble particulier de caractéristiques de performances mains libres.

20. Appareil (203) selon la revendication 17, dans lequel l'information d'auto-identification indique des caractéristiques de performances particulières de l'adaptateur mains libres (201).

21. Appareil (203) selon la revendication 17, dans lequel l'entrée (213) conçue pour recevoir une information d'auto-identification depuis l'adaptateur mains libres (201) comporte une ou plusieurs broches d'un connecteur qui relie l'appareil (203) et l'adaptateur mains libres (201).

22. Appareil (203) selon la revendication 17, dans lequel l'entrée (213) conçue pour recevoir une information d'auto-identification depuis l'adaptateur mains libres (201) comporte des éléments radio conçus pour établir une liaison sans fil entre l'appareil (203) et l'adaptateur mains libres (201) et pour recevoir l'information d'auto-identification depuis la liaison sans fil.

23. Appareil (203) selon la revendication 17, dans lequel l'entrée (213) conçue pour recevoir l'information d'auto-identification depuis l'adaptateur mains libres (201) comporte :

un élément de communication conçu pour établir une liaison de communications en série entre l'adaptateur mains libres (201) et l'appareil (203) ; et
une entrée conçue pour recevoir l'information d'auto-identification en passant par la liaison de communications en série.

24. Appareil (203) selon la revendication 17, dans lequel l'unité de commande est conçue en outre pour ajuster (303, 305, 307, 309) le gain d'un amplificateur (229) de microphone conformément au réglage ou aux réglages.

25. Appareil (203) selon la revendication 17, dans lequel l'unité de commande est conçue en outre pour ajuster (303, 305, 307, 309) le gain d'un amplificateur (231) de haut-parleur conformément au réglage ou aux réglages.

26. Appareil (203) selon la revendication 17, dans lequel l'unité de commande est conçue en outre pour ajuster (303, 305, 307, 309) la longueur d'un filtre (215) qui est utilisé pour une annulation d'écho conformément au réglage ou aux réglages.

27. Appareil (203) selon la revendication 17, dans lequel l'unité de commande est conçue en outre pour ajuster (303, 305, 307, 309) un taux (221) d'adaptation de filtre d'un filtre qui est utilisé pour une annulation d'écho conformément au réglage ou aux réglages.

28. Appareil (203) selon la revendication 17, dans lequel l'unité de commande est conçue en outre pour ajuster (303, 305, 307, 309) le fonctionnement d'un élément (223) d'annulation de bruit dans l'appareil (203) conformément au réglage ou aux réglages.

29. Appareil (203) selon la revendication 17, dans lequel l'unité de commande est conçue en outre pour ajuster (303, 305, 307, 309) le fonctionnement d'un détecteur de voix d'extrémité proche dans l'appareil (203) conformément au réglage ou aux réglages.

30. Appareil (203) selon la revendication 17, dans lequel l'unité de commande est conçue en outre pour ajuster (303, 305, 307, 309) le fonctionnement d'un filtre de communication dans l'appareil (203) conformément au réglage ou aux réglages.

31. Appareil (203) selon la revendication 17, dans lequel l'unité de commande est conçue en outre pour ajuster (303, 305, 307, 309) l'appareil (203) afin qu'il fonctionne en mode duplex conformément au réglage ou aux réglages.

32. Appareil (203) selon la revendication 17, dans lequel l'unité de commande est conçue en outre pour ajuster (303, 305, 307, 309) l'appareil (203) pour qu'il fonctionne en mode en alternat conformément au réglage ou aux réglages.

33. Appareil (203) selon la revendication 17, lequel appareil (203) est un téléphone.

34. Appareil (203) selon la revendication 33, dans lequel le téléphone est un téléphone mobile.

**35.** Appareil (203) selon la revendication 33, dans lequel le ou les composants d'annulation d'écho comprennent un élément d'annulation d'écho acoustique.

**36.** Appareil (203) selon la revendication 17, lequel appareil (203) est un ordinateur numérique à usage général.

**37.** Système comportant :

un appareil (203) selon la revendication 33 ou 34 ; et
un adaptateur mains libres (201) comportant :

un microphone (105) ;
un haut-parleur (109) ;
une interface (213) pour un couplage au téléphone ; et
un moyen destiné à fournir une information d'auto-identification à l'interface (213), l'information d'auto-identification distinguant l'adaptateur mains libres (201) d'au moins un autre adaptateur mains libres.

**38.** Système selon la revendication 37, dans lequel le moyen destiné à fournir une information d'auto-identification à l'interface est un ensemble d'une ou plusieurs broches de connecteur qui sont câblées de façon à représenter l'information d'auto-identification.

**39.** Système selon la revendication 37, dans lequel le moyen destiné à fournir l'information d'auto-identification à l'interface est un régisseur programmable (211).

FIG. 1
(PRIOR ART)

FIG. 2

EP 1 186 156 B1

```
┌─────────────────────────────┐
│     DETERMINE HANDS-FREE     │ ～301
│      PERFORMANCE CLASS       │
└─────────────────────────────┘
                │
                ▼
┌─────────────────────────────┐
│       ADJUST GAIN OF         │
│   MICROPHONE AMP AND OF      │ ～303
│       LOUDSPEAKER AMP        │
└─────────────────────────────┘
                │
                ▼
┌─────────────────────────────┐
│                             │
│     ADJUST FILTER LENGTH     │ ～305
│                             │
└─────────────────────────────┘
                │
                ▼
┌─────────────────────────────┐
│    ADJUST FILTER ADAPTATION  │
│             RATE             │ ～307
│                             │
└─────────────────────────────┘
                │
                ▼
┌─────────────────────────────┐
│        ADJUST OTHER          │
│    ALGORITHMS/COMPONENTS      │ ～309
│                             │
└─────────────────────────────┘
```

FIG. 3

**EP 1 186 156 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5036532 A
- US 5349698 A
- DE 19715596 A1
- US 5535274 A
- US 5479479 A